# EUROPÄISCHE PATENTSCHRIFT

(11) **EP 0 972 131 B1**
(45) Veröffentlichungstag und Bekanntmachung des Hinweises auf die Patenterteilung: **12.06.2002**
(21) Anmeldenummer: 98922621.2
(22) Anmeldetag: 14.03.1998
(51) Int. Cl.: F02D 13/02, F02D 41/34, F02D 33/00

(54) **VERFAHREN ZUM VERMINDERN VON SCHÄDLICHEN ABGASEMISSIONEN EINES MIT MAGEREM KRAFTSTOFF/LUFTGEMISCH BETRIEBENEN OTTO-MOTORES**
METHOD FOR REDUCING HARMFUL EXHAUST GAS EMISSIONS OF A SPARK-IGNITION ENGINE OPERATING WITH A LOW FUEL/AIR MIXTURE
PROCEDE PERMETTANT DE REDUIRE LES EMISSIONS POLLUANTES DE GAZ D'ECHAPPEMENT D'UN MOTEUR A ALLUMAGE PAR ETINCELLES ACTIONNE AVEC UN MELANGE CARBURANT/AIR PAUVRE

(30) Priorität: 25.03.1997 DE 19712356
(43) Veröffentlichungstag der Anmeldung: 19.01.2000
(73) Patentinhaber: DaimlerChrysler AG, 70567 Stuttgart (DE)
(72) Erfinder: ENDERLE, Christian, D-73666 Baltmannsweiler (DE); HERTZBERG, Andreas, D-70374 Stuttgart (DE); RÖSSLER, Klaus, D-73776 Altbach (DE)
(86) Internationale Anmeldenummer: EP9801491
(87) Internationale Veröffentlichungsnummer: WO9842970

(56) Entgegenhaltungen:
- EP-A- 0 752 521
- DE-A- 19 631 986
- PATENT ABSTRACTS OF JAPAN vol. 095, no. 009, 31.Oktober 1995 & JP 07 158473 A (MAZDA MOTOR CORP), 20.Juni 1995,
- PATENT ABSTRACTS OF JAPAN vol. 009, no. 316 (M-438), 12.Dezember 1985 & JP 60 150412 A (MAZDA KK), 8.August 1985,
- PATENT ABSTRACTS OF JAPAN vol. 097, no. 011, 28.November 1997 & JP 09 195839 A (TOYOTA MOTOR CORP), 29.Juli 1997,

## Beschreibung

Die Erfindung betrifft ein Verfahren zum Vermindern von schädlichen Abgasemissionen eines im mageren Kraftstoff/Luftgemisch betriebenen Otto-Motores mit Direkteinspritzung von Kraftstoff nach der im Oberbegriff von Anspruch 1 näher definierten Art.

Es ist bekannt, daß zur Abgasnachbehandlung bei sogenannten Magermotoren NOₓ-Speicherkatalysatoren geeignet sind. Bei Lambda-Werten λ > 1 erfolgt eine Speicherung von Stickoxiden, wobei Lambda das Verhältnis von zugeführter Luftmenge zu einem theoretischen Luftbedarf für die Verbrennung darstellt. Zur Reduktion der an dem Katalysator adsorbierten Stickoxide ist in bestimmten Abständen ein Sprung zu Luftverhältnissen λ < 1 notwendig.

Bei konventionellen Magermotoren mit einem homogenen Kraftstoff/Luftgemisch, welche zumeist bis auf Lambda-Werte von λ = 1,6 abmagerbar sind, kann grundsätzlich eine Anfettung bei gleichbleibender Luftmenge erfolgen. Dabei kann das Motordrehmoment über eine Spätverstellung des Zündzeitpunktes konstant gehalten werden. Mit einer zusätzlichen Verstellung der Drosselklappe zur Luftzuführung kann die Spätverstellung des Zündzeitpunktes auf wenige Arbeitsspiele begrenzt werden.

Ein Otto-Motor mit Direkteinspritzung ist jedoch wesentlich weiter abmagerbar. Um möglichst geringe Verbrauchswerte zu erhalten, wird dabei in üblicher Weise ungedrosselt, d.h. mit einer konstanten Luftmenge, gefahren. Dieser Motor wird somit in den meisten Betriebszuständen im sogenannten Schichtladebetrieb gefahren. Im Unterschied zu einem homogenen Betrieb mit einem Lambda-Wert von λ = 1, wobei der Kraftstoff bereits während des Saughubes eines Kolbens eingespritzt wird, wird bei einer Ladungsschichtung bzw. einem Schichtladebetrieb der Kraftstoff dagegen erst kurz vor der Zündung im Kompressionshub des Kolbens eingespritzt. Durch den weitgehend ungedrosselten Betrieb wird der Motor mit entsprechend hohem Luftüberschuß betrieben.

Ein Wechsel zwischen Ladungsschichtung und homogenen Betrieb bzw. umgekehrt wird als Betriebsartwechsel bezeichnet. Da bei einer derartigen mageren Abgaszusammensetzung keine Abgasnachbehandlung mit einem Drei-Wege-Katalysator möglich ist, wird hierfür z.B. ein NOₓ-Speicherkatalysator verwendet, welcher dann - wie erwähnt - in regelmäßigen Abständen bei Luftverhältnissen λ < 1 regeneriert werden muß, um die adsorbierten Stickoxide wieder zu desorbieren und anschließend zu reduzieren.

Dies bedeutet, daß im Teillastbetrieb mit einem Übergang auf Luftverhältnisse von λ < 1 und zurück bei gleichbleibender Luftmenge eine sehr starke Laständerung verbunden wäre. Aus diesem Grunde muß die angesaugte Luftmenge entsprechend angepaßt werden, wobei gleichzeitig auch von der Betriebsart "Schichtladebetrieb" in einen "homogenen Gemisch-Betrieb" übergegangen werden muß. Ein Betrieb mit homogenem Gemisch ist erst bei Lambda-Werten von λ < 1,6 möglich.

Aus der gattungsgemäßen EP 0 752 521 A1 ist es bekannt, zur Anpassung der Luftmenge die Drosselklappe entsprechend zu verstellen. Dabei besteht jedoch das Problem, daß aufgrund der gespeicherten Luftmengen in dem Strömungsweg zwischen der Drosselklappe und dem Ansaugbereich eines Brennraumes bzw. bis zum Brennraum eine entsprechend lange Zeit benötigt wird, bis sich Luftmengenänderungen durch Verstellung der Drosselklappen im Brennraum auswirken, wobei in nachteiliger Weise über einen längeren Zeitraum Zwischenwerte zu fahren sind. Gleiches gilt für eine anschließend wieder durchgeführte Erhöhung der Luftmenge von fett nach mager und vom homogenen Betrieb in den Schichtladebetrieb. Außerdem beschreibt die Schrift einen konstruktiven Aufbau, bei dem jeder Zylinder über zwei Ansaugkanäle verfügt, wobei diese Ansaugkanäle lastabhängig geregelte Drosselklappen aufweist.

Aus der DE 27 47 885 A1 ist ein Verfahren zum Vermindern von schädlichen Abgasemissionen einer mehrzylindrigen Brennkraftmaschine bekannt, wobei eine Hälfte von Zylindern mit fettem und die andere mit magerem Gemisch betrieben werden soll. Auf diese Weise werden die Abgasintervalle gleicher Zusammensetzung länger bzw. deren Frequenz je nach Zylinderzahl der Brennkraftmaschine niedriger. Damit soll der Konvertierungsgrad eines Selektivkatalysators deutlich verbessert bzw. die Emission schädlicher Abgase vermindert werden. Ein ähnliches Verfahren ist in der GB-PF 1 492 228 beschrieben.

In der DE 39 40 752 A1 ist ein Verfahren zum Steuern eines Otto-Motores ohne Drosselklappe mit Hilfe variabler Einlaßventil-Öffnungsdauern beschrieben. Durch dieses Verfahren sollen in allen Fahrzuständen, auch bei plötzlichen Änderungen des Fahrpedalsignales, die Massen von Luft und Kraftstoff dauernd optimal aneinander angepaßt werden, um hohen Fahrkomfort ohne Zündaussetzer und geringen Schadgasausstoß zu erzielen. Es erfolgt dazu eine Regelung auf den Lambda-Wert λ = 1, wobei aufgrund der fehlenden Drosselklappen in der beschriebenen Brennkraftmaschine die Einlaßventil-Öffnungsdauern zu Regelung genutzt werden. Durch die Regelung auf den Lambda-Wert λ = 1 kann die Verbrennung bei stöchiometrisch sehr günstigen Bedingungen erfolgen, was sich ein einem geringeren Schadstoffausstoß, insbesondere in einem geringeren Anteil an Kohlenmonoxid, bemerkbar macht.

Der vorliegenden Erfindung liegt die Aufgabe zugrunde, ein Verfahren zum Vermindern von schädlichen Abgasemissionen eines im mageren Kraftstoff/Luftgemisch betriebenen Otto-Motoren mit Direkteinspritzung von Kraftstoff zu schaffen, durch das der zur Regenerierung des Katalysators erforderliche Sprung zu Luftverhältnissen von λ < 1 und zurück zu einem Lambda-Wert λ > 1, insbesondere bei einem Schichtladebetrieb des Motors mit höheren Lambda-Werten, wie z.B. λ > 3, möglichst schnell durchgeführt werden kann, um Aussetzer, Verbrauchseinbußen und eine Erhöhung der Schadstoffemissionen zu vermeiden.

Erfindungsgemäß wird diese Aufgabe durch die in den kennzeichnenden Teilen von Anspruch 1 und des Nebenanspruches 4 genannten Merkmale gelöst.

Durch die Verlegung des Ortes zur Reduzierung der Luftmenge in den Ansaugbereich eines Brennraumes, wozu dieser selbst auch gehört, werden kurze Wege und damit kurze Reaktionszeiten bei Luftmengenänderungen erreicht. Diese Lösung kann durch zwei bzw. drei gleichwirkende Maßnahmen erreicht werden, nämlich einmal durch Änderungen in den Ventilsteuerzeiten, wobei die gewünschte Reduzierung der Luftmenge entweder durch ein vorzeitiges Schließen von Einlaßventilen nach dem oberen Totpunkt oder durch ein verspätetes Schließen von Einlaßventilen nach dem unteren Totpunkt des Kolbens des Brennraumes durchgeführt werden kann.

Alternativ dazu können in den zu den Brennräumen führenden Ansaugkanälen, am besten so nahe wie möglich am Eintrittsbereich in den Brennraum, Drosselglieder z.B. in Form von Absperrklappen vorgesehen werden. Sind z.B. zwei Ansaugkanäle pro Brennraum vorhanden, so kann man durch eine entsprechende Steuerung die Luftmengenreduzierung auch durch Abschalten eines Ansaugkanales erzielen.

Nachfolgend sind anhand der Zeichnung Ausführungsbeispiele der Erfindung, aus denen vorteilhafte Ausgestaltungen und Weiterbildungen der Erfindungen ersichtlich sind, prinzipmäßig beschrieben.

Es zeigt:
- Fig.1: eine graphische Darstellung verschiedener Lambda- und Luftdurchsatzwerte und
- Fig. 2: der Ansaug- und Auslaßbereich eines Otto-Motores mit Drosselglieder.

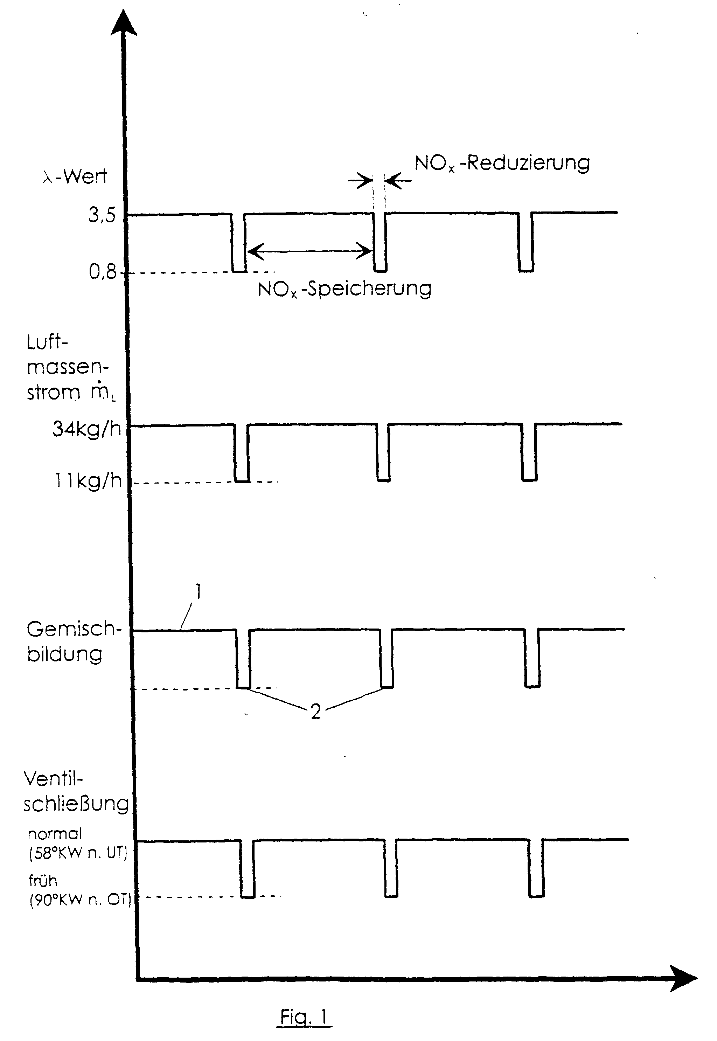

In der Fig. 1 ist ein Beispiel einer Verfahrensweise zum Regenerieren eines NOₓ-Speicherkatalysators bei 2000 U/min eines Motors dargestellt, wobei auf der Ordinate untereinander Lambda-Werte, Luftmassenströme, Gemischbildung und Ventilschließung und auf der Abszisse die Zeit dargestellt ist.

Wie ersichtlich, ist in der obersten Kurve als Ausgangswert im Schichtladebetrieb λ = 3,5 angegeben. In diesem Bereich erfolgt eine NOₓ-Speicherung in dem Katalysator. Nach einer gewissen Zeit wird in dem vorliegenden Ausführungsbeispiel ein Sprung von dem Lambda-Wert λ = 3,5 auf λ = 0,8 durchgeführt und dieser Wert für kurze Zeit beibehalten. Während dieser Zeit erfolgt eine NOₓ-Reduzierung. Anschließend wird wieder in einem Sprung auf den Lambda-Wert λ = 3,5 gewechselt.

Die darunterliegende Kurve zeigt die dazugehörigen Luftmassenströme. Hier ist beispielsweise dargestellt, daß im Magerbetrieb ein Luftmassenstrom von 34 kg/h vorhanden ist, was einem ungedrosselten Betrieb entspricht. Durch eine Reduzierung des Luftmassenstromes auf 11 kg/h wird kurzzeitig während der Zeit, in der der Lambda-Wert λ = 0,8 beträgt, in einem gedrosselten und homogenen Betrieb gefahren. Anschließend wird der Luftmassenstrom wieder auf den ursprünglichen Wert zusammen mit dem dazugehörigen Lambda-Wert λ = 3,5 erhöht.

In der darunterliegenden Kurve ist die Gemischbildung dargestellt. Die Ausgangsgerade 1 stellt dabei den Betrieb in Schichtladung bei dem oben angegebenen Lambda-Wert und dem dazugehörigen Luftmassenstrom dar. Während der NOₓ-Reduzierung bei dem angegebenen Lambda-Wert λ = 0,8 und dem Luftmassenstrom 11 kg/h findet ein homogener Betrieb statt. Dies ist durch die Bezugszahl "2" dargestellt. Nach der NOₓ-Reduzierung erfolgt wieder eine Rückkehr zur Kurve 1 in einem Sprung.

Die unterste Kurve zeigt die Schließung eines Einlaßventiles über der Zeit. Im Magerbetrieb schließt das Ventil z.B. bei 58° Kurbelwellenstellung nach UT (unterer Totpunkt des Kolbens). Mit Hilfe einer variablen Ventilsteuerung, z.B. einer elektromagnetischen Ventilsteuerung, läßt sich das Luftverhältnis von einem Arbeitsspiel zum nächsten auf eine gewünschte Weise verändern. Während des ungedrosselten Betriebes, nämlich im Schichtladebetrieb, wird der Motor in diesem Ausführungsbeispiel mit üblichen Steuerzeiten betrieben.

Beim Sprung auf λ < 1 wird die Luftmenge im Zylinder durch eine Veränderung der Steuerzeiten für die Einlaßventile reduziert. Hierzu sind zwei mögliche Verfahren denkbar:
1. ein frühes Schließen des bzw. der Einlaßventile:
   In diesem Falle wird das Einlaßventil vorzeitig geschlossen, wenn die gewünschte, reduzierte Luftmenge im Zylinder erreicht ist. Auf diese Weise entstehen keine Drosselverluste. Wie in der untersten Kurve der Fig. 1 angegeben, kann dieses frühe Schließen z.B. bei 90° Kurbelwellenstellung nach OT (oberer Totpunkt des Kolbens) erreicht werden. Diese frühe Schließung wird als Sprung solange durchgeführt, wie die NOₓ-Reduzierung stattfinden soll.
   2. ein späteres Schließen des Einlaßventiles:
      In diesem Falle wird ein Teil der angesaugten Luft wieder ausgeschoben, bis die gewünschte reduzierte Luftmenge im Zylinder erreicht wird und erst dann wird das Einlaßventil geschlossen. Die späte Schließung kann z.B. bei einer Kurbelwellenstellung von 90° nach UT (unterer Totpunkt) erfolgen, womit die vorher angesaugte Luftmenge vor Schließen des Einlaßventiles während des Kompressionshubes des Kolbens teilweise wieder ausgeschoben wird.

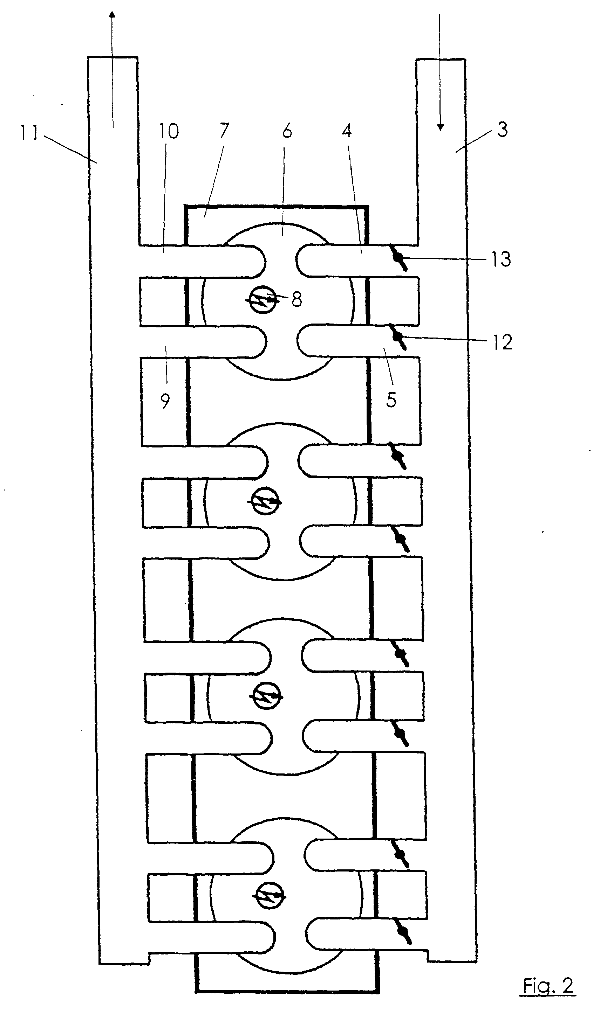

In der Fig. 2 ist eine weitere Möglichkeit dargestellt, im Ansaugbereich des Brennraumes eine Luftmengenreduzierung zu erreichen. Von einem Hauptkanal 3 aus führen jeweils zwei Ansaugkanäle 4 und 5 zu einem Brennraum 6 eines Zylinders eines nur prinzipmäßig dargestellten Otto-Motores 7. Dargestellt ist ein 4-Zylinder-Motor, wobei zur Vereinfachung lediglich ein Zylinder mit dem dazugehörigen Brennraum 6 und den Leitungen mit Bezugszeichen versehen ist.

In jedem Brennraum 6 befindet sich eine Zündkerze 8.

Jeweils zwei Auslaßkanäle 9 und 10 münden in einen gemeinsamen Auslaß-Sammelkanal 11. In jedem der beiden Ansaugkanäle 4 und 5 befinden sich als Drosseleinrichtung Drosselglieder in Form von Absperrklappen 12 und 13. Selbstverständlich ist es jedoch nicht erforderlich, daß in beiden Ansaugkanälen 4 und 5 jeweils eine Absperrklappe 12 bzw. 13 vorhanden ist. Gegebenenfalls ist auch nur eine einzige Absperrklappe möglich, die in diesem Falle einen gedrosselten Luftdurchsatz durch einen der beiden Ansaugkanäle 4 und 5 ermöglicht.

Wenn nur ein Einlaßkanal 4 bzw. 5 pro Brennraum 6 vorhanden ist, dann wird durch die Absperrklappe 12 bzw. 13 lediglich eine Luftmengenreduzierung mit einer entsprechenden Stellung der Absperrklappe 12 bzw. 13 und keine vollständige Absperrung durchgeführt.

Der Wechsel zwischen den Betriebsarten "Schichtladebetrieb" und "Betrieb mit homogenem Gemisch" kann auch zum Freibrennen, d.h. zum Entfernen von Ablagerungen im Brennraum 6, insbesondere an der Zündkerze 8 und einer nicht dargestellten Einspritzdüse, verwendet werden.

Grundsätzlich ist es auch möglich, die Reduzierung des Luftmassenstromes und den Übergang von dem Schichtladebetrieb auf einen homogenen Gemisch-Betrieb in mehreren Schritten durchzuführen. Dies kann z.B. dadurch erfolgen, daß man von dem ungedrosselten Betrieb mit Ladungsschicht und einem Lambda-Wert von z.B. λ = 3,5 in einem ersten Schritt in einen gedrosselten Betrieb mit niedrigen Lambda-Werten übergeht. Dies kann z.B. bis zu einem Lambda-Wert von 1,5 erfolgen. Bei diesem Wert erfolgt dann der Wechsel in den homogenen Be-trieb, was durch einen Wechsel des Einspritzzeitpunktes von Kraftstoff von spät, d.h. kurz vor der Zündung durch die Zündkerze 8, auf einen früheren Zeitpunkt erfolgt, womit man ein homogenes Gemisch in dem Brennraum 6 erreicht. Diesen Wechsel könnte man auch mit der "normalen" Drosselklappe durchführen, wobei man dann bei einem Lambda-Wert von ca. λ = 1,5 von Ladungschichtung auf homogen übergeht.

Anschließend erfolgt dann in gewünschter Weise die weitere Reduzierung der Luftmenge auf den erforderlichen Lambda-Wert von λ < 1, um die NOₓ-Reduzierung zu erreichen.

## Patentansprüche

1. Verfahren zum Vermindern von schädlichen Abgasemissionen eines im mageren Kraftstoff/Luftgemisch betriebenen Otto-Motores mit Direkteinspritzung von Kraftstoff, wobei der Motor bei Teillast im Schichtladebetrieb mit einem Lambda-Wert von λ > 1 betrieben wird und wobei zur Reduktion von an einem Katalysator adsorbierten Stickoxiden in bestimmten Abständen durch Drosselung der zugeführten Luftmenge und/oder Erhöhung der Kraftstoffeinspritzmenge ein Übergang zu einem homogenen Betrieb mit Luftverhältnissen von λ < 1 durchgeführt wird,
**dadurch gekennzeichnet, daß**
in einem ersten Schritt die Luftmenge in einem Brennraum (6) durch Anderungen in den Ventilsteuerzeiten reduziert wird und in einem zweiten Schritt ein zeitlich schneller Sprung von dem Schichtladebetrieb zu dem homogenen Betrieb erfolgt, wobei ein Lambda-Wert λ < 1 eingestellt wird.

2. Verfahren nach Anspruch 1,
**dadurch gekennzeichnet, daß**
die Reduzierung der Luftmenge durch ein verspätetes Schließen von Einlaßventilen nach dem unteren Totpunkt (UT) des Kolbens des Brennraumes (6) durchgeführt wird.

3. Verfahren nach Anspruch 1,
**dadurch gekennzeichnet, daß**
die Reduzierung der Luftmenge durch ein vorzeitiges Schließen von Einlaßventilen nach dem oberen Totpunkt (OT) des Kolben des Brennraumes (6) durchgeführt wird.

4. Verfahren zum Vermindern von schädlichen Abgasemissionen eines im mageren Kraftstoff /Luftgemisch betriebenen Otto-Motores mit Direkteinspritzung von Kraftstoff, wobei der Motor bei Teillast im Schichtladebetrieb mit einem Lambda-Wert von λ > 1 betrieben wird und wobei zur Reduktion von an einem Katalysator adsorbierten Stickoxiden in bestimmten Abständen durch Drosselung der zugeführten Luftmenge und/oder Erhöhung der Kraftstoffeinspritzmenge ein Übergang zu einem homogenen Betrieb mit Luftverhältnissen von λ < 1 durchgeführt wird,
**dadurch gekennzeichnet, daß**
in einem ersten Schritt die Luftmenge in dem Brennraum (6) durch nahe am Brennraum gelegene Drosseleinrichtungen (12 bzw. 13) in wenigstens einem von zwei zu dem Brennraum (6) führenden Ansaugkanälen (4, 5) reduziert wird, wobei dazu ein Ansaugkanal (4 bzw. 5) abgesperrt wird, und in einem zweiten Schritt ein zeitlich schneller Sprung von dem Schichtladebetrieb zu dem homogenen Betrieb erfolgt, wobei ein Lambda-Wert λ < 1 eingestellt wird.

## Claims

1. A process for reducing harmful exhaust emissions in a spark ignition engine with direct fuel injection run on a lean fuel/air mix, the engine being run with a lambda value of λ > 1 during stratified charging at part throttle and a transition to homogenous operation with air ratios of λ < 1 being made at given intervals by restricting the volume of air fed in and/or increasing the volume of fuel injected in order to reduce the nitrogen oxides adsorbed at a catalytic converter,
**characterised in that**
in a first stage the volume of air in a combustion chamber (6) is reduced by modifying the valve timing, and in a second stage there is a fast jump from stratified charging to homogenous operation, with a lambda value of λ < 1 being set.

2. A process in accordance with claim 1,
**characterised in that**
the volume of air is reduced by the delayed closure of intake valves after bottom dead centre (BDC) of the piston in the combustion chamber (6).

3. A process in accordance with claim 1,
**characterised in that**
the volume of air is reduced by the premature closure of intake valves after top dead centre (TDC) of the piston in the combustion chamber (6).

4. A process for reducing harmful exhaust emissions in a spark ignition engine with direct fuel injection run on a lean fuel/air mix, the engine being run with a lambda value of λ > 1 during stratified charging at part throttle and a transition to homogenous operation with air ratios of λ < 1 being made at given intervals by restricting the volume of air fed in and/or increasing the volume of fuel injected in order to reduce the nitrogen oxides adsorbed at a catalytic converter,
**characterised in that**
in a first stage the volume of air in the combustion chamber (6) is reduced by means of restricting device (12/13) situated near to the combustion chamber in at least one of two intake ports (4, 5) leading to the combustion chamber (6), one intake port (4 or 5) being blocked for this purpose, and in a second stage there is a fast jump from stratified charging to homogenous operation, with a lambda value of λ < 1 being set.

## Revendications

1. Procédé pour réduire des émissions nocives de gaz d'échappement d'un moteur à essence fonctionnant avec un mélange carburant/air maigre, avec injection directe de carburant, selon lequel dans le cas d'une charge partielle, dans le fonctionnement à charge stratifiée, le moteur fonctionne, avec une valeur lambda λ > 1, et selon lequel pour réduire des oxydes d'azote adsorbés dans un catalyseur, une commutation est faite à des intervalles déterminés sur un fonctionnement homogène avec des rapports d'air **λ** < 1, par étranglement de la quantité d'air envoyée et/ou accroissement de la quantité de carburant injectée, **caractérisé en ce que** lors d'une première étape, la quantité d'air dans une chambre de combustion (6) est réduite au moyen de modifications des temps de commande des soupapes et, dans une seconde étape, un saut brusque dans le temps est exécuté depuis le fonctionnement à charge stratifiée au fonctionnement homogène, auquel cas une valeur lambda λ < λ est réglée.

2. Procédé selon la revendication 1, **caractérisé en ce que** la réduction de la quantité d'air est réalisée au moyen d'une fermeture retardée de soupapes d'admission après le point mort bas (UT) du piston de la chambre de combustion (6).

3. Procédé selon la revendication 2, **caractérisé en ce que** la réduction de la quantité d'air est exécutée au moyen d'une fermeture anticipée de soupapes d'admission après le point mort haut (OT) du piston de la chambre de combustion (6).

4. Procédé pour réduire des émissions nocives de gaz d'échappement d'un moteur à essence fonctionnant avec un mélange carburant/air maigre, avec injection directe de carburant, selon lequel dans le cas d'une charge partielle, dans le fonctionnement à superposition de charge stratifiée, le moteur fonctionne avec une valeur lambda λ > λ, et selon lequel pour réduire des oxydes d'azote adsorbés dans un catalyseur, une commutation est faite à des intervalles déterminés sur un fonctionnement homogène avec des rapports d'air **λ** < 1, par étranglement de la quantité d'air envoyée et/ou accroissement de la quantité de carburant injectée, **caractérisé en ce que** lors d'une première étape, la quantité d'air dans la chambre de combustion (6) est réduite par des dispositifs d'étranglement (12 et 13) situés à proximité de la chambre de combustion, dans au moins l'un de deux canaux d'aspiration (4,5) aboutissant à la chambre de combustion (6), auquel cas à cet effet un canal d'aspiration (4 ou 5) est bloqué, et dans une seconde étape, un saut rapide dans le temps est exécuté depuis le fonctionnement à charge stratifiée au fonctionnement homogène, auquel cas une valeur lambda λ < λ est réglée.
